# EUROPÄISCHE PATENTANMELDUNG

(11) **EP 2 957 793 A2**
(43) Veröffentlichungstag der Anmeldung: **23.12.2015**
(21) Anmeldenummer: 15162776.7
(22) Anmeldetag: 08.04.2015
(51) Int. Cl.: F16H 7/12

(54) **RIEMENSPANNVORRICHTUNG**

(30) Priorität: 08.04.2014 DE 102014206716
(71) Anmelder: Muhr und Bender KG, 57439 Attendorn (DE)
(72) Erfinder: Buchen, Thomas, 57489 Drolshagen (DE); Diblik, Jan, 262 03 Mokrovraty (CZ); Vollmer, Frederik, 57392 Schmallenberg-Dorlar (DE)
(74) Vertreter: Neumann Müller Oberwalleney & Partner Patentanwälte

(57) **Zusammenfassung**

Die Erfindung betrifft eine Riemenspannvorrichtung für einen Riementrieb, umfassend: einen Grundkörper 3, der mit einem ortsfesten Bauteil fest verbindbar ist; zumindest einen Spannarm 4, der relativ zum Grundkörper 3 um eine Schwenkachse A schwenkbar gelagert ist; Federmittel 6, mit denen der Spannarm 4 in Umfangsrichtung federnd abgestützt ist, wobei das Verhältnis des Nenndurchmessers zur axialen Länge der Federmittel 6, im Einbauzustand, größer als 3,0 ist; sowie eine Spannrolle 7 zum Spannen des Riemens, die an dem Spannarm 4 um eine Drehachse B drehbar gelagert ist; wobei der Grundkörper 3 und der Spannarm 4 zumindest teilweise aus Kunststoff hergestellt sind.

## Beschreibung

Die Erfindung betrifft eine Riemenspannvorrichtung für einen Riementrieb, der üblicher Weise einen endlosen Riemen und zumindest zwei Riemenscheiben aufweist, von denen eine als Antrieb und eine als Abtrieb des Riementriebs fungieren kann. Derartige Riementriebe kommen insbesondere an Verbrennungsmotoren eines Kraftfahrzeugs zum Antreiben von Nebenaggregaten zum Einsatz, wobei eine erste Riemenscheibe auf der Kurbelwelle des Verbrennungsmotors sitzt und den Riemen antreibt. Weitere Riemenscheiben sind den Nebenaggregaten zugeordnet, wie beispielsweise Wasserpumpe, Lichtmaschine oder Klimaanlagenkompressor, und werden vom Riemenantrieb drehend angetrieben. Bei herkömmlichen Riementrieben sind die Nebenaggregate als Verbraucher ausgelegt, das heißt sie werden von der Riemenscheibe der Kurbelwelle über den Riemen angetrieben. Dabei ist zwischen der Kurbelwelle und dem in Umlaufrichtung des Riemens benachbarten Aggregat, in der Regel der Generator, das Lostrum ausgebildet. Um hier eine ausreichende Umschlingung des Riemens um die Riemenscheibe zu gewährleisten, wird der Riemen mittels einer Spannrolle der Riemenspannvorrichtung vorgespannt.

Aus der EP 2 573 423 A1 ist eine Riemenspannvorrichtung für einen Riementrieb der genannten Art bekannt. Die Riemenspannvorrichtung weist einen Grundkörper auf, an dem ein Spannarm schwenkbar gelagert ist. Die Riemenspannvorrichtung ist derart gestaltet, dass die Schwenkachse des Spannarms in montiertem Zustand innerhalb des Außendurchmessers der Riemenscheibe des Aggregats angeordnet ist.

Mit den Bestrebungen nach reduziertem Kraftstoffverbrauch bzw. reduzierten CO2-Emissionen geht das Bedürfnis nach Gewichtsreduzierung von Fahrzeugkomponenten einher. So sind auch auf dem Gebiet der Riemenspannvorrichtungen bereits Ansätze zur Reduzierung des Gewichts verfolgt worden.

Aus der EP 0 659 249 B1 ist eine Riemenspannvorrichtung mit einem Trägerelement und einem Spannarm bekannt. Der Spannarm kann aus Metall oder Plastik gestaltet sein. Der Spannarm ist an dem Trägerelement schwenkbar gelagert. Das Trägerelement kann ein Metall- oder Plastikdeckel, eine Montageplatte oder ein Lagersitz (bracket) sein.

Aus der WO 2006/105656 A1 ist ein Riemenspanner für einen Riementrieb bekannt. Der Riemenspanner umfasst einen Arm und eine Schwenkbuchse, um die der Arm schwenkbar gelagert ist. Der Arm ist ein Kunststoff-Formteil. Als Kunststoffmaterial wird faserverstärktes organisches Harzmaterial verwendet. Als Verstärkungsmaterial können Glasfasern, Aramidfasern, Kohlefasern, Stahlfasern oder Nanopartikel benutzt werden.

Insbesondere bei kompakt bauenden Riemenspannern können hohe Drehschwankungen im Riementrieb, welche durch Wechsel vom Motor- auf Anlasserbetrieb bedingt sind, zu einer hohen Reibleistung und entsprechenden thermischen Belastung des Riemenspanners führen. Hiermit verbunden sind entsprechend hohe Anforderungen an die Dämpfung des Systems im Anlasserbetrieb.

Aus der DE 2011 003 113 A1 ist eine Zugmittelspannvorrichtung mit einer Rolle und einem Spanner zum Auslenken und Dämpfen einer Bewegung der Rolle bekannt. Der Spanner weist ein Gehäuse auf, in dem eine Feder und gegebenenfalls ein Dämpfer angeordnet sind. Am Gehäuse ist außen ein Kühlkörper mit mehreren Kühlrippen vorgesehen.

Aus der DE 10 2007 015 676 A1 ist eine Spannvorrichtung mit einem Gehäuse und einem Spannhebel mit einer drehbaren Spannrolle bekannt. Zwischen Gehäuse und Spannhebel ist eine Schraubenfeder wirksam angeordnet. An einem Federende ist ein Bremsschuh angeordnet, der zur guten Wärmeabfuhr gegen eine zylindrische Innenwand des Gehäuses andrückbar ist.

Aus der DE 103 33 876 A1 ist ein Spannelement mit einer Riemenscheibe, die mittels eines Wälzlagers drehbar auf einem Befestigungsmittel gelagert ist, und mit einem Distanzstück bekannt, auf welchem der Innenring des Wälzlagers angeordnet ist. Das Distanzstück steht in thermischem Kontakt mit dem Lagerinnenring und besteht aus einem Material mit guter Wärmeleitfähigkeit.

Der vorliegenden Erfindung liegt die Aufgabe zugrunde, eine Riemenspannvorrichtung für einen Riementrieb vorzuschlagen, die ein geringes Gewicht aufweist, einfach und kostengünstig herstellbar ist und gute Dämpfungseigenschaften aufweist, so dass sie den technischen Anforderungen insbesondere für den Einsatz in einem Riementrieb mit Startergenerator über eine lange Lebensdauer standhält.

Eine Lösung besteht in einer Riemenspannvorrichtung für einen Riementrieb, umfassend: einen Grundkörper, der mit einem ortsfesten Bauteil fest verbindbar ist; zumindest einen Spannarm, der relativ zum Grundkörper um eine Schwenkachse (A) schwenkbar gelagert ist; Federmittel, mit denen der Spannarm in Umfangsrichtung federnd abgestützt ist, wobei das Verhältnis des Nenndurchmessers zur axialen Länge der Federmittel, im Einbauzustand, größer als 3,0 ist; sowie eine Spannrolle zum Spannen des Riemens, die an dem Spannarm um eine Drehachse (B) drehbar gelagert ist; wobei der Grundkörper und der Spannarm zumindest teilweise aus Kunststoff hergestellt sind.

Ein Vorteil der Riemenspannvorrichtung ist, dass diese aufgrund der spezifischen federbezogenen Größenverhältnisse besonders kompakt baut und aufgrund der Verwendung eines Kunststoffwerkstoffs ein geringes Gewicht aufweist. Als Nenndurchmesser der Federmittel soll vorliegend insbesondere auch ein mittlerer Durchmesser der Federmittel mit umfasst sein, der sich von einem Federabschnitt zu einem in Bezug auf die Schwenkachse diametral gegenüberliegenden Federabschnitt ergibt. Durchmesser und axiale Länge beziehen sich in diesem Zusammenhang insbesondere auf die Schwenkachse der Vorrichtung, die je nach Ausgestaltung der Federmittel auch mit der Federmittellinie, um welche die Feder gewunden ist, zusammenfallen kann. Insgesamt hat die Riemenspannvorrichtung eine geringe Massenträgheit, so dass die Spannweite der Trumkräfte reduziert wird. Zumindest teilweise aus Kunststoff soll insbesondere die Möglichkeiten mit einschließen, dass der Grundkörper beziehungsweise der Spannarm jeweils Abschnitte aus Kunststoff aufweisen, insbesondere größtenteils aus Kunststoff bestehen, beziehungsweise, dass der Grundwerkstoff ein Kunststoffmaterial ist, in den Elemente aus einem anderen Werkstoff integriert sein können, oder dass der Grundkörper und der Spannarm jeweils vollständig aus Kunststoff hergestellt sind.

Die Riemenspannvorrichtung kann nach einer ersten Möglichkeit als Einarmspanner gestaltet sein, das heißt genau einen Spannarm aufweisen. In diesem Fall ist der Spannarm in Umfangsrichtung über die Federmittel an dem Grundkörper federnd abgestützt. Nach einer zweiten Möglichkeit kann die Riemenspannvorrichtung auch als Zweiarmspanner gestaltet sein, das heißt genau zwei Spannarme aufweisen. In diesem Fall sind die beiden Spannarme über die Federmittel in Umfangsrichtung gegeneinander abgestützt. Bei Ausgestaltung in Form eines Zweiarmspanners können der erste und/oder der zweite Spannarm zumindest teilweise aus Kunststoffmaterial hergestellt sein. Es versteht sich, dass vorliegend alle auf "einen" oder "den" Spannarm bezogenen Einzelheiten gleichermaßen auch für einen zweiten Spannarm gelten können.

Zweiarmspanner kommen in Riementrieben zum Einsatz, bei denen als weiteres Nebenaggregat ein Startergenerator in den Riementrieb integriert ist, das heißt ein Elektromotor, der je nach Betriebszustand als Starter (Anlasser) oder Lichtmaschine (Generator) betrieben werden kann. Im Normal- oder Motorbetrieb ist die Riemenscheibe an der Kurbelwelle die treibende Scheibe, während der Startergenerator wie auch die übrigen Aggregate angetrieben werden. Im Start- oder Anlasserbetrieb treibt der Startergenerator über die zugehörige Riemenscheibe die Kurbelwelle an, um den Verbrennungsmotor zu starten. Bei solchen Riementrieben mit Startergenerator als Nebenaggregat, findet zwischen Motorbetrieb einerseits und Anlasserbetrieb andererseits ein Wechsel zwischen Zugtrum und Lostrum zu beiden Seiten der Riemenscheibe des Startergenerators statt. Es ist demnach erforderlich, federbelastete Spannrollen für beide der genannten Trums und damit zwei Spannarme vorzusehen, von denen jeweils eine am Lostrum unter Federkraft wirksam wird, während die andere vom gespannten Zugtrum zurückgedrängt wird.

Nach einer bevorzugten Ausgestaltung sind Verbindungsmittel zum Verbinden des Spannarms mit dem Grundkörper vorgesehen sind, wobei die Verbindungsmittel zumindest ein erstes Verbindungselement aufweisen, das dem Grundkörper zugeordnet ist, und zumindest ein zweites Verbindungselement, das dem Spannarm zugeordnet ist, wobei das erste und das zweite Verbindungselement derart gestaltet sind, dass der Spannarm und der Grundkörper durch eine Einsteck- und Drehbewegung miteinander verbindbar sind. Insofern funktioniert die genannte Verbindung nach Art eines Bajonett-Verschlusses. Hiermit ergibt sich eine einfache Montage der Riemenspannvorrichtung. Die Verbindungsmittel sind vorzugsweise derart gestaltet, dass der Spannarm an den Grundkörper nur in genau einer vorbestimmten Drehposition einsteckbar ist. Auf diese Weise wird die Montage vereinfacht und die Montagezeit verkürzt. Derartige fehlervermeidende Prinzipien werden auch als Poka Yoke bezeichnet.

Als Material für den Grundkörper und den Spannarm wird vorzugsweise ein glasfaserverstärkter Kunststoff verwendet. Der Grundkörper und/oder der Spannarm kann wenigstens ein Verstärkungselement aus einem Metallwerkstoff aufweisen, das von Kunststoff umspritzt ist. Mit wenigstens einem Verstärkungselement ist gemeint, dass im Grundkörper beziehungsweise im Spannarm ein oder mehrere Verstärkungselemente vorgesehen sein können. Sofern vorliegend von einem oder dem Verstärkungselement die Rede ist, gilt dies selbstverständlich auch für jedes weitere Verstärkungselement. Das Verstärkungselement kann beispielsweise in Form einer Buchse gestaltet sein, welche vom Kunststoffmaterial umspritzt ist. Insbesondere kann der Spannarm eine verstärkende Lagerbuchse, beziehungsweise Lagerelement, aus einem metallischen Werkstoff aufweisen, mit dem der Spannarm auf dem Lagerelement des Grundkörpers drehbar gelagert ist. Ferner kann der Grundkörper Verstärkungsbuchsen aus einem metallischen Werkstoff zur Befestigung des Grundkörpers an einem ortsfesten Bauteil aufweisen.

Nach einer bevorzugten Ausgestaltung weist der Grundkörper Lagermittel auf, mit denen der Spannarm gegenüber dem Grundkörper gelagert ist. Die Lagermittel sind vorzugsweise als Gleitlager ausgebildet und umfassen zumindest ein erstes Lagerelement, das dem Grundkörper zugeordnet ist, und zumindest ein zweites Lagerelement, das dem Spannarm zugeordnet ist, wobei zwischen den Lagerelementen Reibflächenpaarungen gebildet sind. Insbesondere ist vorgesehen, dass die Lagermittel ein Axiallager und ein Radiallager umfassen. Axial- und Radiallager können funktional getrennt ausgebildet sein, das heißt das Axiallager dient rein zur Aufnahme von Axialkräften zwischen Spannarm und Grundkörper, während das Radiallager rein zur Aufnahme von Radialkräften dient. Es versteht sich jedoch, dass auch kombinierte Axial-/Radiallager verwendbar sind.

Nach einer bevorzugten Ausgestaltung sind die Lagerelemente des Grundkörpers segmentartig über dem Umfang angeordnet, beziehungsweise zwischen jeweils zwei in Umfangsrichtung benachbarten Lagerelementen ist eine Ausnehmung gebildet, so dass der Spannarm in den Grundkörper eingesteckt werden kann. Hiermit wird eine axiale Montage vom Spannarm relativ zum Grundkörper ermöglicht. Außerdem können die Lagerelemente als integrale Bestandteile des Grundkörpers mit diesem als eine Baueinheit vorgefertigt werden. Hierfür können die Lagerelemente aus einem reibungsarmen Kunststoffmaterial hergestellt werden, das sich vom Grundwerkstoff des Grundkörpers unterscheidet und an diesem bei der Herstellung eingespritzt wird. Grundsätzlich ist es denkbar, dass der Grundkörper aus unterschiedlichen Kunststoffmaterialien hergestellt ist, die unterschiedliche Materialeigenschaften aufweisen. Die Herstellung kann insbesondere im Wege eines Mehrkomponenten-Spritzgießens erfolgen, bei dem unterschiedliche Kunststoffmaterialien in einem Werkzeug in einem Arbeitsgang hergestellt werden.

Nach einer bevorzugten Ausgestaltung ist vorgesehen, dass der Grundkörper und/oder der zumindest eine Spannarm eine Öffnung aufweist, in die sich eine Antriebswelle und/oder Riemenscheibe eines Aggregats in montiertem Zustand hinein erstreckt. Die Öffnung ist vorzugsweise als Durchgangsöffnung gestaltet; sie kann aber auch endseitig geschlossen sein. Vorzugsweise ist ein Hülsenabschnitt des Spannarms in einen Ringabschnitt des Grundkörpers eingesteckt. Eine die Öffnung umgebende Wandung des Spannarms ist vorzugsweise mit umfangsverteilten Rippen versehen. Die Rippen erfüllen insbesondere zwei Funktionen, nämlich zum einen führen sie bei Betrieb entstehende Reibwärme aus der Riemenspannvorrichtung ab. Zum anderen unterstützen die Rippen eine gezielte Luftzufuhr in Richtung zum Aggregat, an dem die Riemenspannvorrichtung befestigt ist, um dieses effektiv zu kühlen. Nach einer denkbaren Konkretisierung können die Rippen in Bezug auf eine Längsachse der Öffnung gerade, winklig oder bombiert verlaufen. Mit winkligem Verlauf der Rippen sollen alle Formen mit umfasst sein, bei denen die Flanken der Rippen oder Teile davon nicht parallel zur Längsachse verlaufen. Insbesondere können die Rippen auch helixartig oder schaufelartig gestaltet sein.

Nach einer möglichen Weiterbildung kann die Riemenspannvorrichtung zumindest ein Dämpfungselement aufweisen, das aus einem dämpfenden Material besteht, welches sich vom Kunststoffmaterial des Grundkörpers und dem des Spannarms unterscheidet. Mit einem solchen Dämpfungselement lässt sich das Dämpfungsverhalten des Riemenspanners verbessern. Bei dem Dämpfungselement kann es sich um einen weicheren Kunststoff handeln, beispielsweise ein Elastomer oder TPE, welcher an geeigneter Stelle separat eingefügt oder integral mit eingespritzt wird, beispielsweise mittels Mehrkomponenten-Spritzgießen.

Die Federmittel sind vorzugsweise in Form zumindest einer oder genau einer Feder gestaltet, welche sich um die Längsachse beziehungsweise Schwenkachse herum erstreckt. Vorzugsweise ist die Feder als Schraubenfeder gestaltet, deren Federmittellinie zumindest im Wesentlichen parallel zur Schwenkachse A verläuft, wobei die Schraubenfeder maximal drei volle Windungen, insbesondere maximal zwei volle Windungen, aufweist. Eine volle Windung umfasst dabei insbesondere eine Erstreckung einer Windung über 360° um die Federmittellinie. Für eine besonders kompakte Bauform der Riemenspannvorrichtung ist es günstig, wenn das Verhältnis von Nenndurchmesser der Schraubenfeder zu axialer Länge der Schraubenfeder, im Einbauzustand, größer als 4,0, insbesondere größer als 5,0 ist. Hiermit wird ermöglicht, dass die Riemenspannvorrichtung stirnseitig an das Aggregat angebracht werden kann, ohne zusätzlichen Bauraum im Umfeld des Aggregats zu beanspruchen. Alternativ können die Federmittel auch als Bügel- oder Torsionsfeder gestaltet sein, welche sich in Umfangsrichtung um weniger als eine volle Windung erstreckt. Auch ist es möglich, dass die Federmittel eine oder mehrere Schraubenfedern umfassen, deren Federmittellinie sich in eingebautem Zustand in Umfangsrichtung um die Schwenkachse A der Riemenspannvorrichtung herum erstreckt.

Bevorzugte Ausführungsbeispiele werden nachstehend anhand der Zeichnungsfiguren erläutert. Hierin zeigt
- Figur 1: eine erfindungsgemäße Riemenspannvorrichtung in Explosionsdarstellung in einer ersten perspektivischen Ansicht von schräg oben;
- Figur 2: die Riemenspannvorrichtung gemäß Figur 1 in einer zweiten perspektivischen Ansicht von schräg unten;
- Figur 3: die Riemenspannvorrichtung gemäß Figur 1 in montiertem Zustand in einer perspektivischen Ansicht von schräg oben;
- Figur 4: die Riemenspannvorrichtung gemäß Figur 1 in montiertem Zustand in einer perspektivischen Ansicht von schräg unten;
- Figur 5: die Riemenspannvorrichtung gemäß Figur 1 im Längsschnitt;
- Figur 6: ein Detail der Riemenspannvorrichtung gemäß Figur 1 in Axialansicht von unten in Montageposition;
- Figur 7: das Detail der Riemenspannvorrichtung gemäß Figur 7 mit aufgesetzter Abdeckscheibe;
- Figur 8: in Abwicklung betrachtet die Rippen A) der Riemenspannvorrichtung gemäß Figur 1; B) in einer ersten Variante mit bombiertem Verlauf in einer ersten Umfangsrichtung; C) in einer zweiten Variante mit bombiertem Verlauf in einer zweiten Umfangsrichtung; D) in einer weiteren Variante mit schrägem Verlauf in einer ersten Umfangsrichtung; und E) in einer weiteren Variante mit schrägem Verlauf in einer zweiten Umfangsrichtung.

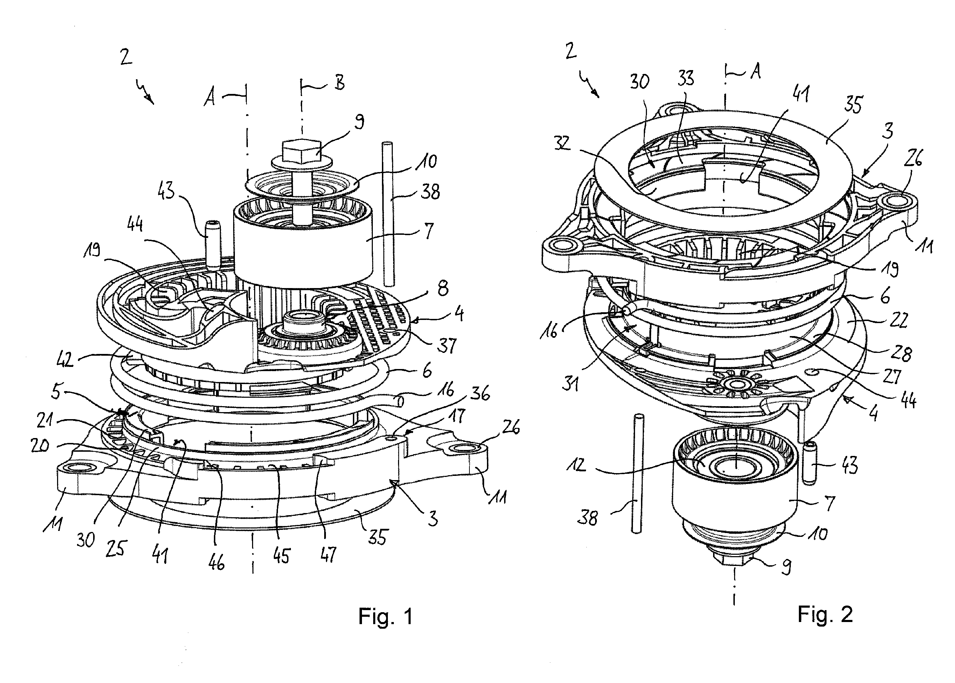

Die Figuren 1 bis 8, welche im Folgenden gemeinsam beschrieben werden, zeigen eine erfindungsgemäße Riemenspannvorrichtung 2. Die Riemenspannvorrichtung 2 umfasst einen Grundkörper 3, der an einem ortsfesten Bauteil wie beispielsweise einem Aggregat (nicht dargestellt) oder einem mit dem Aggregat verbundenen Bauteil befestigt werden kann, einen Spannarm 4, der relativ zum Grundkörper 3 mittels einer Lageranordnung 5 um eine Schwenkachse A schwenkbar gelagert ist, und Federmittel 6, über die der Spannarm 4 gegenüber dem Grundkörper 3 in Umfangsrichtung abgestützt ist. Zur Befestigung des Grundkörpers 3 hat dieser drei nach radial außen vorstehende Befestigungsabschnitte 11 mit Bohrungen, durch welche Schrauben zur Befestigung an dem ortsfesten Bauteil durchgesteckt werden können.

Der Spannarm 4 trägt an einem freien Endabschnitt eine Spannrolle 7, die um eine zur Schwenkachse A parallele Drehachse B drehbar ist. Die Spannrolle 7 ist an einem in Form eines Lagerzapfens gestalteten Verstärkungselement 8 des Spannarms 4 drehbar gelagert und mittels einer Schraube 9 an diesem befestigt. Axial benachbart zur Spannrolle 7 ist ferner eine Scheibe 10 erkennbar, welche das Lager 12 vor eindringendem Schmutz schützt. Der Spannarm 4 ist über die Lageranordnung 5 axial und radial gegenüber dem Grundkörper 3 um die Schwenkachse A drehbar gelagert und über eine Verbindungsanordnung 13 mit dem Grundkörper 3 verbunden. Der Spannarm 4 liegt zumindest etwa in einer Ebene mit der Lageranordnung 5, so dass der axiale Bauraum der Vorrichtung gering ist.

Die Federmittel 6 sind in Form einer Schraubenfeder gestaltet, deren Federmittellinie im Wesentlichen parallel zur Schwenkachse A verläuft. Ein erstes Ende 16 der Schraubenfeder 6 ist nach radial außen gebogen und an einer entsprechenden Anlagefläche 17 des Grundkörpers 3 in Umfangsrichtung abgestützt. Das entgegengesetzte zweite Ende 23 der Schraubenfeder 6 ist ebenfalls nach radial außen abgebogen und stützt sich an einer entsprechenden Anlagefläche 24 des Spannarms 4 in Umfangsrichtung ab. Die Schraubenfeder 6 bewirkt eine Verspannung des Spannarms 4 gegenüber dem Grundkörper 3, so dass der Riemen des Riementriebes vorgespannt wird.

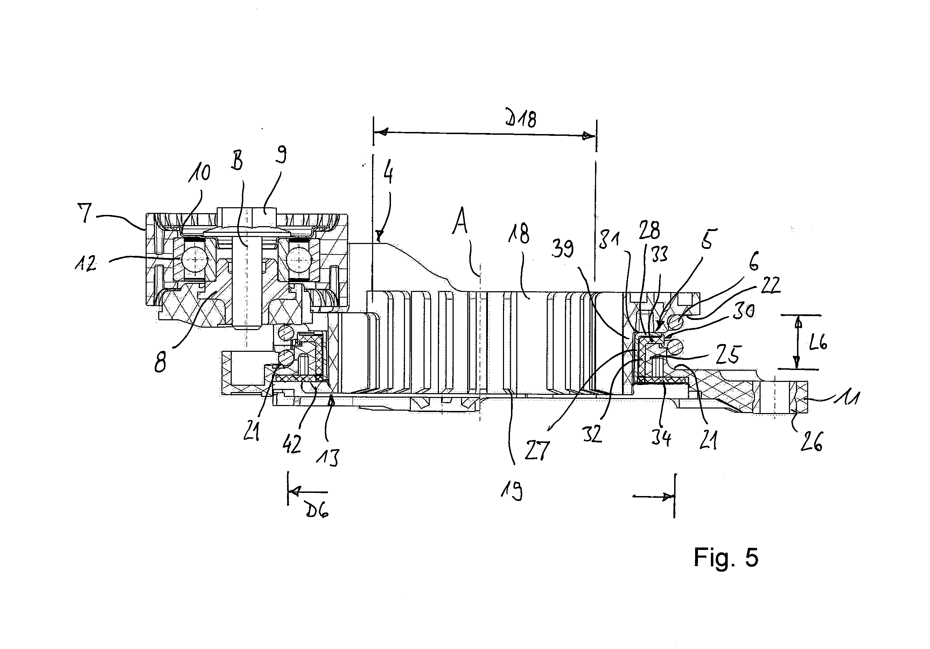

Die Schraubenfeder 6 ist koaxial außerhalb der Lageranordnung 5 für den Spannarm 4 angeordnet. Dabei überdecken sich die Schraubenfeder 6 und die Lageranordnung 5 zumindest mit Teilabschnitten in axiale Richtung, um den Bauraum in axiale Richtung gering zu halten. Es ist insbesondere in Figur 5 erkennbar, dass die Schraubenfeder 6 einen verhältnismäßig großen Durchmesser in Bezug auf die axiale Länge aufweist. Die Anzahl der Windungen ist größer als eins und kleiner als zwei. Vorzugsweise beträgt die Umfangserstreckung der Schraubenfeder 6 zwischen 540° und 690°. Das Verhältnis von Nenndurchmesser D6 der Schraubenfeder 6 zur axialen Länge L6 beträgt, im Einbauzustand der Schraubenfeder, in welchem die Schraubenfeder axial vorgespannt ist, zwischen 3,0 und 9,0, insbesondere zwischen 5,0 und 8,0. Es versteht sich, dass die genannten Werte nicht einschränkend gemeint sind. Innerhalb der genannten Bereiche sind alle Zwischenbereiche denkbar. Prinzipiell lassen sich auch - je nach Bauraumverhältnissen - größere Werte als 9,0 realisieren, womit die Feder dann im Verhältnis zum Durchmesser extrem kurzbauend in axiale Richtung wäre. Weiter versteht es sich, dass das genannte Verhältnis von Federdurchmesser zu axialer Länge im Einbauzustand unter anderem auch vom Drahtdurchmesser des Federdrahts abhängt. Je größer der Drahtdurchmesser, desto kleiner kann die axiale Länge der Schraubenfeder 6 ausgelegt sein.

Es ist weiter erkennbar, dass die Riemenspannvorrichtung 2 beziehungsweise der Spannarm 4 eine Öffnung 18 aufweisen, die koaxial zur Längsachse A ist. Auf diese Weise lässt sich der Grundkörper 3 einfach an ein Aggregat anschrauben, wobei ein Ende einer Antriebswelle des Aggregats (nicht dargestellt) gegebenenfalls in die Öffnung 18 eintauchen kann. Insgesamt wird somit eine axial kurz bauende Anordnung erreicht. Zumindest in einem Abschnitt der Öffnung 18 ist ein kleinster Innendurchmesser D18 der Öffnung 18 vorzugsweise größer als ein Außendurchmesser der Antriebswelle (nicht dargestellt) und insbesondere auch größer als ein Außendurchmesser der mit der Antriebswelle verbundenen Riemenscheibe (nicht dargestellt), wobei es sich versteht, dass dieser gleich groß oder kleiner als der Außendurchmesser der Riemenscheibe sein kann. Der Grundkörper 3 hat einen Ringabschnitt 25 für die Lagerung des Spannarms 4. An den Ringabschnitt 25 schließt sich radial außen ein Flanschabschnitt an, der als axiale Stützfläche 21 für die Schraubenfeder 6 dient. Vom Flanschabschnitt stehen mehrere Befestigungsabschnitte 11 nach radial außen ab, die jeweils eine Bohrung zur Befestigung des Grundkörpers 3 an dem Anschlussbauteil aufweisen. Die Befestigungsabschnitte 11 liegen gegenüber dem Flanschabschnitt und gegenüber der Schraubenfeder 6 auf einem größeren Durchmesser. So lassen sich auf den Grundkörper 3 einwirkende Drehmomente gut abstützen beziehungsweise in das Anschlussbauteil einleiten.

Die Schraubenfeder 6 ist mit axialer Vorspannung zwischen der Stützfläche 21 des Grundkörpers 3 und einer axial gegenüberliegenden Stützfläche 22 des Spannarms 4 eingesetzt. Auf diese Weise wird der Spannarm 4 axial vom Grundkörper 3 weg beaufschlagt wobei sich die beiden genannten Teile über die Verbindungsanordnung 13 axial gegeneinander abstützen. Die Stützfläche 21 für die Feder 6 erstreckt sich über einen Umfangsteilabschnitt des Grundkörpers 3. Dabei liegt zumindest ein Teilabschnitt der Stützfläche 21 in einer Ebene, welche mit der Antriebswelle eine axiale Überdeckung aufweist. Die Stützfläche 21 des Grundkörpers 3 hat in Umfangsrichtung eine Rampenform, die an die Steigung der Schraubenfeder 6 angepasst ist. Es ist insbesondere in Figur 1 erkennbar, dass die Stützfläche 21 des Grundkörpers 3 durch über den Umfang verteilte, radial verlaufende Rippen gebildet ist, auf denen die Feder 6 im Einbauzustand axial abgestützt ist. Zwischen den Rippen sind jeweils Ausnehmungen 20 gebildet, die eine Masseanhäufung in diesem Bereich vermeiden. Im Übrigen bewirken die Rippen in vorteilhafter Weise einen guten Abtransport von Reibungswärme, die bei Betrieb der Riemenspannvorrichtung entsteht.

Wie insbesondere in Figur 5 erkennbar ist, ist die Riemenspannvorrichtung 2 so gestaltet, dass die Lageranordnung 5 des Spannarms 4 am Grundkörper 3 aus Sicht des Aggregats 28 hinter der Riemenebene liegt. Als Riemenebene ist die Ebene definiert, welche durch die Riemenmitte in montiertem Zustand aufgespannt wird. Die Lageranordnung 5 umfasst ein oder mehrere erste Lagerelemente 30, die dem Grundkörper 3 zugeordnet sind, und ein zweites Lagerelement 31, das dem Spannarm 4 zugeordnet ist.

Die ersten Lagerelemente 30 sind im Halblängsschnitt betrachtet etwa C-förmig gestaltet und weisen radial innen einen zylindrischen Abschnitt 32 auf, von dem zwei Flanschabschnitte 33, 34 nach radial außen abstehen. Insofern umgreifen die ersten Lagerelemente 30 den Ringabschnitt 25 des Grundkörpers. Dabei bildet der erste Flanschabschnitt 33, welcher dem Spannarm 4 zugewandt ist, eine axiale Lagerfläche, um den Spannarm 4 in einer ersten axialen Richtung abzustützen, während der vom ersten Flanschabschnitt 33 axial beabstandete zweite Flanschabschnitt 34 eine axiale Lagerfläche für den Spannarm 4 in einer entgegengesetzten zweiten axialen Richtung bildet. Die zylindrischen Abschnitte 32 bilden eine radiale Lagerfläche für den Spannarm 4.

Die ersten Lagerelemente 30 und der Grundkörper 3 werden insbesondere im Wege des Mehrkomponenten-Spritzgießen einteilig hergestellt. Dabei bestehen die Lagerelemente 30 aus anderen Kunststoffmaterial als der Grundkörper 3. Insbesondere kann als Lagermaterial ein reibungsarmes Kunststoffmaterialverwendet werden, beispielsweise ein hochfester Polyamid mit Polytetrafluorethylen-Anteil (PTFE) mit einer Festigkeit von beispielsweise zwischen 2.000 MPa und 4.000 MPa. Demgegenüber kann als Grundwerkstoff ein faserverstärktes Polyamid mit einer Festigkeit von beispielsweise zwischen 15.000 MPa und 22.000 MPa verwendet werden. Mit dem Mehrkomponenten-Spritzgießen kann die Baueinheit aus Grundkörper 3 mit Lagerelementen 30 einfach und kostengünstig mit nur einem Werkzeug in einem Arbeitsgang hergestellt werden.

Der Spannarm 4 hat einen Hülsenabschnitt 39, auf den das zweite Lagerelement 31, das in Form einer Lagerbuchse gestaltet ist, aufgepresst ist. Die Lagerbuchse 31 ist insbesondere ein Blechumformteil und kann beispielsweise aus Aluminium oder einer Aluminium-Legierung hergestellt werden. Dabei bildet ein Buchsenabschnitt 27 der Lagerbuchse mit den Zylinderabschnitten 32 der ersten Lagerelemente 30 eine Radiallagerung, während ein Flanschabschnitt 28 der Lagerbuchse 31 mit den Flanschabschnitten 33 der ersten Lagerelemente 30 eine Axiallagerung bildet.

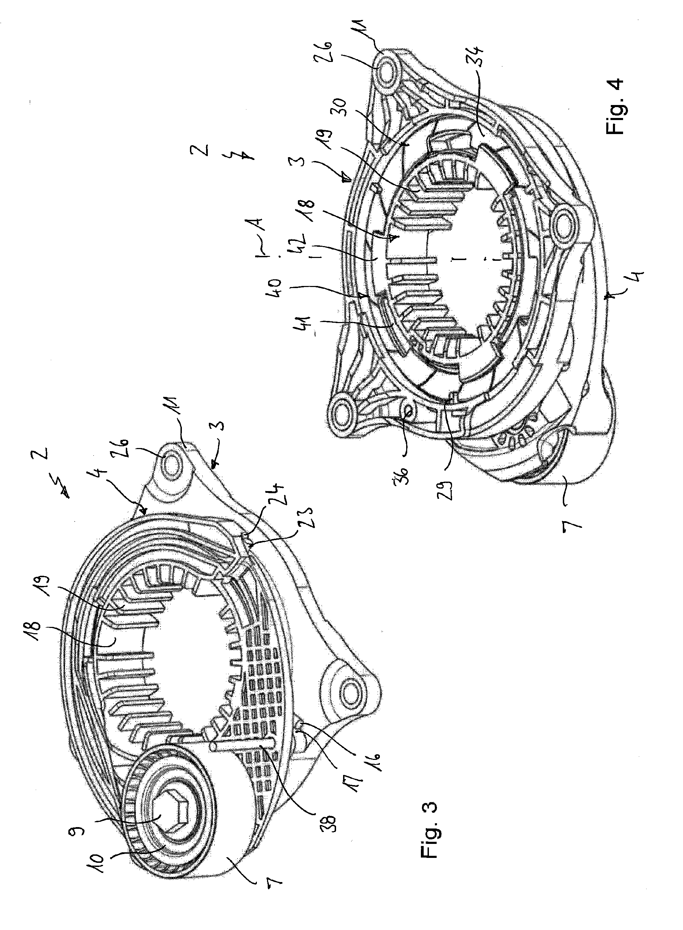

Insbesondere in Figur 4 sind die Verbindungsmittel 40 erkennbar, mit denen der Spannarm 4 mit dem Grundkörper 3 verbunden ist. Die Verbindungsmittel 40 sind nach Art eines Bajonett-Verschlusses gestaltet und umfassen mehrere über den Umfang verteilte erste Verbindungselemente 41, die dem Grundkörper 3 zugeordnet sind, und mehrere hierzu korrespondierende zweite Verbindungselemente 42, die dem Spannarm 4 zugeordnet sind. Die ersten Verbindungselemente 41 sind in Form von Ausnehmungen gestaltet, welche den Ringabschnitt 25 des Grundkörpers 3 unterbrechen. Die zweiten Verbindungselemente 42 sind entsprechend als radiale Vorsprünge gestaltet, die zu den Ausnehmungen gegengleiche Formen haben, so dass sie in die Ausnehmungen axial einführbar sind. Insofern können der Spannarm 4 mit dem Grundkörper 3 durch eine Einsteck- und Drehbewegung miteinander verbunden werden.

In einer ersten relativen Drehposition, die auch als Bajonettposition bezeichnet werden kann, lassen sich Grundkörper 3 und Spannarm 4 axial ineinander schieben. Sind die Vorsprünge 42 des Spannarms 4 vollständig durch die Ausnehmungen 41 hindurchgeführt, kann der Spannarm 4 relativ zum Grundkörper 3 in eine zweite relative Drehposition verdreht werden. In dieser zweiten Position stützen sich die Vorsprünge 42 des Spannarms 4 zumindest mittelbar an dem ersten Lagerelement 30 beziehungsweise dem Flanschabschnitt 34 des Lagerelements 30 axial ab. Spannarm 4 und Grundkörper 3 sind in dieser Stellung axial miteinander fixiert und über die Feder 6 axial gegeneinander vorgespannt. Um zu verhindern, dass sich die beiden Bauteile 3, 4 wieder ungewollt in die Bajonettposition verdrehen, ist ein Sicherungsstift 43 vorgesehen, der in eine entsprechende Bohrung 44 des Spannarms eingesteckt ist und sich in eine in Umfangsrichtung erstreckende Ausnehmung 45 des Grundkörpers 3 hineinerstreckt. Die Enden 46, 47 der Ausnehmung 45 bilden Anschläge in Umfangsrichtung, das heißt in eingestecktem Zustand des Sicherungsstifts 43 kann der Spannarm 4 relativ zum Grundkörper 3 nur über die Umfangserstreckung der Ausnehmung 45 bewegt werden. Innerhalb dieses Umfangsbereichs liegen die Vorsprünge 42 des Spannarms 4 jedoch stets auf dem Flanschabschnitt 34 auf, das heißt Vorsprünge 42 und Ausnehmungen 41 sind zueinander verdreht, das heißt in Umfangsrichtung versetzt, so dass eine Demontage verhindert wird.

Die Verbindungsmittel 40 sind so gestaltet, dass der Spannarm 4 und der Grundkörper 3 nur in der ersten Drehposition (Bajonettposition) ineinander einsteckbar sind. Dies wird dadurch erreicht, dass die ersten und zweiten Verbindungselemente 41, 42 unregelmäßig über den Umfang verteilt angeordnet sind und nur in genau einer relativen Drehstellung miteinander fluchten. Durch diese Ausgestaltung wird die Montage vereinfacht und eine Falschmontage verhindert.

Zum Vorspannen der Riemenspannvorrichtung in einer Montageposition, werden der Spannarm 4 und der Grundkörper 3 soweit relativ zueinander verdreht, bis die Montagebohrungen 36, 37 miteinander fluchten, so dass der Montagestift 38 in diese eingesteckt werden kann. In dieser Montageposition wird der Grundkörper 3 der Riemenspannvorrichtung 2 an das Aggregat montiert. Nach vollständiger Montage des Riementriebs und des Riemens um die Antriebsscheiben der Aggregate wird der Montagestift 38 gezogen und der Spannarm 4 wird, bedingt durch die Vorspannkraft der Feder 6, gegen den Riemen beaufschlagt.

Wie oben bereits erwähnt, wird als Grundmaterial für den Grundkörper 3 und den Spannarm 4 vorzugsweise ein hochfester faserverstärkter Kunststoff verwendet, beispielsweise ein glasfaserverstärkter Polyamid. Es ist insbesondere in Figur 5 erkennbar, dass im Grundkörper 3 und im Spannarm 4 Verstärkungselemente 8, 26 aus einem anderen Material vorgesehen sind. Insbesondere weist der Grundkörper 3 an den Befestigungsabschnitten 11 Verstärkungselemente in Form von Buchsen 26 aus einem Metallwerkstoff auf, die von dem Kunststoffmaterial des Grundkörpers 3 umspritzt sind. Der Spannarm 4 weist ein Verstärkungselement 8 in Form eines Lagerzapfens aus einem Metallwerkstoff auf, der von dem Grundwerkstoff umspritzt ist und als Träger für das Lager 12 der Spannrolle 7 dient.

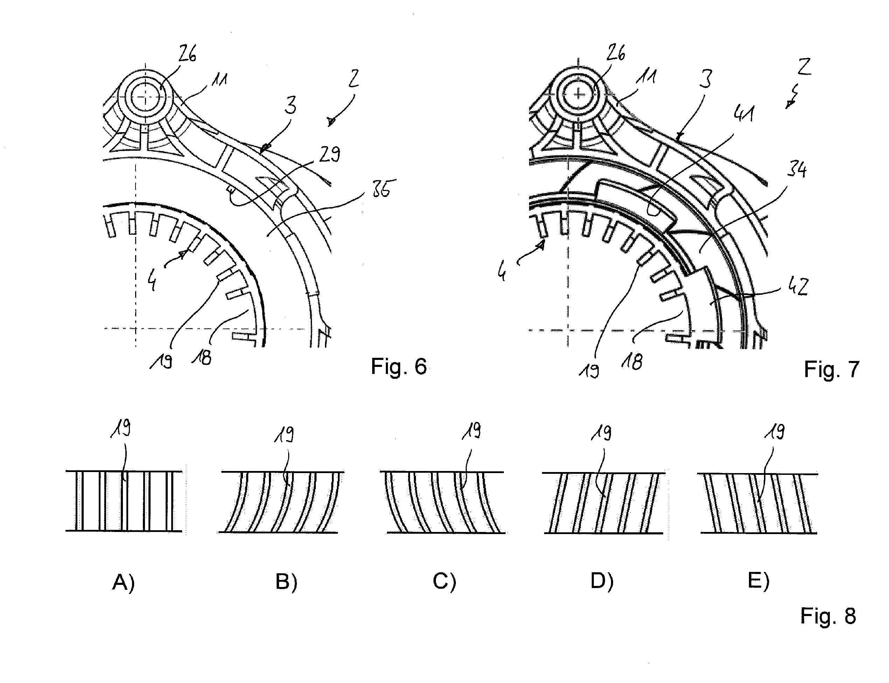

Wie insbesondere aus den Figuren 6 und 7 hervorgeht, welche einen Ausschnitt der Riemenspannvorrichtung 2 in Axialansicht von unten zeigen, können die die Buchsen 26 umgebenden Befestigungsabschnitte 11 des Grundkörpers 3 aus einem Material mit gegenüber dem Grundmaterial verbesserten Dämpfungseigenschaften hergestellt sein. Dabei können die Befestigungsabschnitte 11 mit dämpfendem Material gemeinsam mit dem Grundmaterial des Grundkörper 3 ebenfalls im Wege des Mehrkomponenten-Spritzgießens einteilig hergestellt werden. Durch das dämpfende Material der Befestigungs- bzw. Flanschabschnitte 11 lässt sich das Dämpfungsverhalten des Riemenspanners 2 insgesamt verbessern. Als Dämpfungsmaterial kann beispielsweise ein Elastomer oder TPE verwendet werden. Dieser kann insbesondere eine Shore-Härte von 80 bis 120 aufweisen. Es versteht sich jedoch, dass die Befestigungsabschnitte 11 auch aus demselben Grundmaterial wie der Rest des Grundkörpers hergestellt werden können. Figur 6 zeigt die Riemenspannvorrichtung 2 mit einer von unten auf das erste Lagerelement 30 beziehungsweise den Lagerabschnitt 34 aufgesetzten Abdeckscheibe 35, welche die Lageranordnung 5 vor eindringendem Schmutz schützen soll. Die Abdeckscheibe 35 ist ringförmig gestaltet und wird nach dem Einstecken und Verdrehen des Spannarms 4 mit dem Grundkörper 3 verbunden. Hierfür wird die Abdeckscheibe 35, welche vorliegend ringförmig gestaltet ist, auf die Verbindungsmittel 40 aufgesetzt und mit dem Grundkörper 3 formschlüssig verbunden. Zum Verbinden sind an einer Innenfläche des Grundkörpers 3 mehrere Rastnasen 29 über den Umfang vorgesehen, mit denen die Abdeckscheibe 35 axial verrastet wird. Selbstverständlich sind auch andere formschlüssige, kraftschlüssige und/oder stoffschlüssige Verbindungen denkbar. Ebenso ist es denkbar, dass die Abdeckscheibe unterhalb der Verbindungselemente 42, das heißt zwischen den Verbindungselementen und dem Lagerelement 30 angeordnet wird. Figur 7 zeigt die Vorrichtung ohne Abdeckscheibe.

Wie oben bereits erwähnt, ist die Öffnung 18 des Spannarms 4 so gestaltet, dass sich die eine Antriebswelle beziehungsweise Riemenscheibe eines Aggregats (nicht dargestellt) in montiertem Zustand in diese hinein erstrecken kann. Die die Öffnung 18 umgebende Wandung des Spannarms 4 ist mit umfangsverteilten Rippen 19 versehen. Die Rippen 19 erfüllen insbesondere zwei Funktionen, nämlich zum einen führen sie bei Betrieb entstehende Reibwärme aus dem Spannarm 4 ab. Zum anderen unterstützen die Rippen 19 eine gezielte Luftzufuhr in Richtung zum Aggregat, an dem die Riemenspannvorrichtung befestigt ist, um dieses effektiv zu kühlen.

Im Folgenden wird unter besonderer Bezugnahme auf die Figuren 8A bis 8E näher auf die diversen möglichen Ausgestaltungen der Rippen 19 eingegangen. Bei der Ausführungsform gemäß den Figuren 1 bis 7 und 8a sind die Rippen gerade gestaltet, das heißt sie erstrecken sich parallel zur Drehachse A. Bei den Ausführungsformen gemäß den Figuren 8B und 8C sind die Rippen 19 bombiert, das heißt mit zunehmender axialer Erstreckung stärker in radialer Richtung gewölbt. Durch diese Ausgestaltung wird ein Drall der durch die Rippen strömenden Luft erzeugt, welcher gezielt zur Kühlung des Aggregats verwendet werden kann. Der Unterschied zwischen den Ausführungen gemäß den Figuren 8B und 8C besteht nur in der Drehrichtung der Wölbung, welche in einem Fall rechtsgerichtet und im anderen Fall links gerichtet ist. Bei den Ausführungsformen gemäß den Figuren 8D und 8E sind die Rippen 19 schräg beziehungsweise helixartig in Bezug auf die Längsachse A gestaltet. Hiermit wird ebenfalls ein Drall der durchströmenden Luft erzeugt. Der Unterschied zwischen den Ausführungen gemäß den Figuren 8D und 8E besteht in der Steigungsrichtung der Rippen, welche in einem Fall rechtsgerichtet und im anderen Fall links gerichtet ist.

Insgesamt bietet die erfindungsgemäße Riemenspannvorrichtung 2 den Vorteil einer besonders kompakten und leichten Bauweise.

### Bezugszeichenliste

- 2: Riemenspannvorrichtung
- 3: Grundkörper
- 4: Spannarm
- 5: Lager
- 6: Feder
- 7: Spannrolle
- 8: Verstärkungselement
- 9: Schraube
- 10: Scheibe
- 11: Befestigungsabschnitt
- 12: Lager
- 13: Verbindungsanordnung
- 14: Axialscheibe
- 15: Hülsenansatz
- 16: Federende
- 17: Anlagefläche
- 18: Öffnung
- 19: Rippe
- 20: Ausnehmung
- 21: Stützfläche
- 22: Stützfläche
- 23: Federende
- 24: Anlagefläche
- 25: Ringabschnitt
- 26: Verstärkungselement
- 27: Buchsenabschnitt
- 28: Flanschabschnitt
- 29: Rastnase
- 30: Lagerelement
- 31: Lagerelement
- 32: Zylinderabschnitt
- 33: Flanschabschnitt
- 34: Flanschabschnitt
- 35: Abdeckscheibe
- 36: Montagebohrung
- 37: Montagebohrung
- 38: Montagestift
- 39: Hülsenabschnitt
- 40: Verbindungsmittel
- 41: erstes Verbindungselement
- 42: zweites Verbindungselement
- 43: Sicherungsstift
- 44: Bohrung
- 45: Ausnehmung
- 46: Anschlag
- 47: Anschlag

- A: Schwenkachse
- B: Drehachse

## Patentansprüche

1. Riemenspannvorrichtung für einen Riementrieb, umfassend
einen Grundkörper (3), der mit einem ortsfesten Bauteil fest verbindbar ist,
zumindest einen Spannarm (4), der relativ zum Grundkörper (3) um eine Schwenkachse (A) schwenkbar gelagert ist,
Federmittel (6), mit denen der Spannarm (4) in Umfangsrichtung federnd abgestützt ist, wobei das Verhältnis des Nenndurchmessers zur axialen Länge der Federmittel (6) im Einbauzustand größer als 3,0 ist, sowie
eine Spannrolle (7) zum Spannen des Riemens, die an dem Spannarm (4) um eine Drehachse (B) drehbar gelagert ist,
**dadurch gekennzeichnet, dass** der Grundkörper (3) und der Spannarm (4) jeweils zumindest teilweise aus Kunststoff hergestellt sind.

2. Riemenspannvorrichtung nach Anspruch 1,
**dadurch gekennzeichnet,**
**dass** Verbindungsmittel (40) zum Verbinden des Spannarms (4) mit dem Grundkörper (3) vorgesehen sind, wobei die Verbindungsmittel zumindest ein erstes Verbindungselement (41) aufweisen, das dem Grundkörper (3) zugeordnet ist, und zumindest ein zweites Verbindungselement (42), das dem Spannarm (4) zugeordnet ist, wobei das erste und das zweite Verbindungselement (41, 42) durch eine Einsteck- und Drehbewegung miteinander verbunden sind.

3. Riemenspannvorrichtung nach Anspruch 2,
**dadurch gekennzeichnet,**
**dass** die Verbindungsmittel (40) derart gestaltet sind, dass der Spannarm (4) und der Grundkörper (3) nur in genau einer vorbestimmten Drehposition ineinander einsteckbar sind.

4. Riemenspannvorrichtung nach einem der Ansprüche 1 bis 3,
**dadurch gekennzeichnet,**
**dass** der Grundkörper (3) und der Spannarm (4) aus einem glasfaserverstärkten Kunststoff hergestellt sind.

5. Riemenspannvorrichtung nach einem der Ansprüche 1 bis 4,
**dadurch gekennzeichnet,**
**dass** zumindest eines von den Teilen Grundkörper (3) und Spannarm (4) mindestens ein Verstärkungselement (8, 26) aus einem Metallwerkstoff aufweist, das von Kunststoff umspritzt ist.

6. Riemenspannvorrichtung nach einem der Ansprüche 1 bis 5,
**dadurch gekennzeichnet,**
**dass** zwischen dem Grundkörper (3) und dem Spannarm (4) Lagermittel (5) vorgesehen sind, mit denen der Spannarm (4) gegenüber dem Grundkörper (3) um die Schwenkachse (A) drehbar gelagert ist, wobei die Lagermittel (5) zumindest ein dem Grundkörper (3) zugeordnetes Lagerelement (30) und zumindest ein dem Spannarm (4) zugeordnetes Lagerelement (31) aufweisen.

7. Riemenspannvorrichtung nach Anspruch 6,
**dadurch gekennzeichnet,**
**dass** mehrere dem Grundkörper (3) zugeordnete Lagerelemente (30) vorgesehen sind, die segmentartig über den Umfang verteilt angeordnet sind.

8. Riemenspannvorrichtung nach Anspruch 6 oder 7,
**dadurch gekennzeichnet,**
**dass** das zumindest eine Lagerelement (30) und der Grundkörper (3) als eine Baueinheit hergestellt sind, wobei die Lagerelemente (30) insbesondere in den Grundkörper (3) integriert sind.

9. Riemenspannvorrichtung nach einem der Ansprüche 6 bis 8,
**dadurch gekennzeichnet,**
**dass** der Grundkörper (3) aus einem ersten Kunststoffmaterial und das zumindest eine Lagerelement (30) aus einem zweiten Kunststoffmaterial hergestellt sind, wobei das erste und das zweite Kunststoffmaterial unterschiedliche Materialeigenschaften aufweisen.

10. Riemenspannvorrichtung nach einem der Ansprüche 6 bis 9,
**dadurch gekennzeichnet,**
**dass** das zumindest eine Lagerelement (31) des Spannarms (4) aus einem metallischen Werkstoff hergestellt und insbesondere in Form einer Lagerbuchse gestaltet ist.

11. Riemenspannvorrichtung nach einem der Ansprüche 1 bis 10,
**dadurch gekennzeichnet,**
**dass** der Spannarm (4) eine Öffnung (18) aufweist, in die sich eine Antriebswelle und/oder Riemenscheibe eines Aggregats in montiertem Zustand hinein erstreckt, wobei eine die Öffnung (18) umgebende Wandung des Spannarms (4) mit umfangsverteilten Rippen (19) versehen ist.

12. Riemenspannvorrichtung nach Anspruch 11,
**dadurch gekennzeichnet,**
**dass** die Rippen (19) in Bezug auf die Schwenkachse (A) parallel, winklig oder bombiert verlaufen.

13. Riemenspannvorrichtung nach einem der Ansprüche 1 bis 12,
**dadurch gekennzeichnet,**
**dass** zumindest ein Dämpfungselement vorgesehen ist, dass aus einem dämpfenden Material besteht, welches sich vom Grundmaterial des Grundkörpers (3) und vom Grundmaterial des Spannarms (4) unterscheidet.

14. Riemenspannvorrichtung nach einem der Ansprüche 1 bis 13,
**dadurch gekennzeichnet,**
**dass** die Federmittel (6) in Form einer Schraubenfeder gestaltet sind, deren Federachse im Einbauzustand zumindest im Wesentlichen parallel zur Schwenkachse (A) verläuft, wobei die Schraubenfeder maximal drei volle Windungen, insbesondere maximal zwei volle Windungen, aufweist.

15. Riemenspannvorrichtung nach einem der Ansprüche 1 bis 14,
**dadurch gekennzeichnet,**
**dass** das Verhältnis von Nenndurchmesser (D6) der Federmittel (6) zu axialer Länge (L6) der Federmittel im Einbauzustand größer als 5,0 ist.
